# EUROPEAN PATENT APPLICATION

(11) **EP 4 436 091 A1**
(43) Date of publication of application: **25.09.2024**
(21) Application number: 21968414.9
(22) Date of filing: 20.12.2021
(51) Int. Cl.: H04L 7/00, H04J 3/06

(54) **MESSAGE TRANSMISSION METHOD AND CORRESPONDING DEVICE**

(71) Applicant: Huawei Technologies Co., Ltd., Shenzhen, Guangdong 518129 (CN)
(72) Inventor: SHAO, Hengkang, Shenzhen, Guangdong 518129 (CN); GONG, Chenji, Shenzhen, Guangdong 518129 (CN); LI, Jie, Shenzhen, Guangdong 518129 (CN); YAO, Zhiming, Shenzhen, Guangdong 518129 (CN)
(74) Representative: Goddar, Heinz J.
(86) International application number: PCT/CN2021/139652
(87) International publication number: WO 2023/115258

(57) **Abstract**

This application discloses a packet transmission method and a corresponding apparatus. The method includes: A first node receives a first delay request packet from a second node, where a source address of the first delay request packet is an address of the second node. The first node sends a first delay response packet to the second node, where the first delay response packet includes first time information, the first time information indicates receiving time of the first delay request packet, and a destination address of the first delay response packet is the address of the second node. The first time information is for determining a time delay between the first node and the second node. In the method, the first node responds, in a unicast manner, to the first delay response packet sent by the second node, to avoid a problem that network load is heavy because the first delay response packet reaches another node that the first delay response packet does not need to reach.

## Description

### TECHNICAL FIELD

This application relates to the field of electronic technologies, and in particular, to a packet transmission method and a corresponding apparatus.

### BACKGROUND

In the field of automobile or industrial automation control, clocks of a plurality of devices need to be synchronized. For example, in an in-vehicle system, a clock of an audio player needs to be synchronized with a clock of a video player, to implement synchronization between an image played by the video player and a sound played by the audio player.

During clock synchronization, a node whose clock needs to be adjusted is a slave node, and a node whose clock is used as a reference clock by the slave node is a grandmaster node, in other words, the slave node adjusts the local clock with reference to the clock of the grandmaster node. Specifically, the slave node may obtain a time delay and a frequency deviation between the slave node and the grandmaster node by measuring transmission time information of a packet between the slave node and the grandmaster node, so that the slave node adjusts the local clock based on the time delay and the frequency deviation, to synchronize the clock of the slave node with the clock of the grandmaster node.

However, in the foregoing solution, the slave node and the grandmaster node each send a packet in a multicast manner. Therefore, a packet between the slave node and the grandmaster node may reach another node that the packet does not need to reach, causing a problem of heavy network load.

### SUMMARY

This application provides a packet transmission method and a corresponding apparatus, to reduce network load.

According to a first aspect, a packet transmission method is provided. The method includes: A first node receives a first delay request packet from a second node, where the first delay request packet is for requesting to measure a time delay between the first node and the second node, and a source address of the first delay request packet is an address of the second node. The first node sends a first delay response packet to the second node, where the first delay response packet includes first time information, the first time information indicates receiving time of the first delay request packet, and a destination address of the first delay response packet is the address of the second node. The first time information is for determining a time delay between the first node and the second node.

The first delay request packet may also be referred to as a first delay request. Similarly, other packets provided in this application may also be referred to as such for short, and other packets are not described one by one.

According to the foregoing solution, the first node may respond, in a unicast manner, to the first delay response packet sent by the second node (namely, send the first delay response packet to the second node, where the destination address of the first delay response packet is the address of the second node). Compared with an existing clock synchronization solution in which all packets are transmitted in a multicast manner, a problem that network load is heavy because the first delay response packet reaches another node at which the first delay response packet does not need to reach can be avoided. In addition, in this solution, a packet is transmitted between the first node and the second node, so that the first node and the second node can perform clock synchronization in an E2E manner, to reduce hardware deployment costs and improve efficiency of clock synchronization. In addition, the second node can sense a status of the first node in time, to improve network security performance.

In a possible design, the method further includes: The first node sends a first follow-up packet to the second node, where the first follow-up packet includes second time information, the second time information indicates sending time of the first delay response packet, a destination address in the first follow-up packet is the address of the second node, and the second time information is for determining the time delay between the first node and the second node.

In this manner, the first node can transmit the first follow-up packet to the second node in a form of a unicast packet, to further reduce network load, reduce hardware costs, and improve efficiency of clock synchronization.

In a possible design, the method further includes: The first node sends a second delay request packet to the second node, where the second delay request packet is for requesting to measure the time delay between the first node and the second node, and the second delay request packet corresponds to the address of the second node. The first node receives a second delay response packet from the second node, where the second delay response packet includes third time information, the third time information indicates receiving time of the second delay request packet, a source address of the second delay request packet is the address of the second node, and the second delay response packet corresponds to the address of the second node.

In this manner, the first node may measure the time delay between the first node and the second node, to help the first node manage a connection status of the second node. In addition, the second delay response packet corresponding to the second node corresponds to the address of the second node. When the first node simultaneously communicates with a plurality of nodes, the first node may clearly distinguish between packets corresponding to the different nodes, so that the first node can simultaneously measure time delays corresponding to the plurality of nodes, to improve measurement efficiency of time delays.

In a possible design, the method further includes: The first node receives a second follow-up packet from the second node, where the second follow-up packet includes fourth time information, the fourth time information indicates sending time of the second delay response packet, a source address of the second follow-up packet is the address of the second node, and the second follow-up packet corresponds to the address of the second node.

In this manner, the first node may distinguish between follow-up packets corresponding to different nodes, to improve measurement efficiency of time delays.

In a possible design, the method further includes: The first node sends a first synchronization packet to the second node, where the first node sends a third follow-up packet to the second node, the third follow-up packet includes fifth time information, and the fifth time information indicates sending time of the first synchronization packet. The first node sends a second synchronization packet to the second node. The first node sends a fourth follow-up packet to the second node, where the fourth follow-up packet includes sixth time information, and the sixth time information indicates sending time of the second synchronization packet. The fifth time information and the sixth time information are for determining a clock frequency deviation between the first node and the second node.

In this manner, the second node may measure the clock frequency deviation between the first node and the second node, to improve reliability of clock synchronization between the second node and the first node.

In a possible design, the first node sends one or more of the first delay response packet, the first follow-up packet, the second delay request packet, the first synchronization packet, the third follow-up packet, the second synchronization packet, or the fourth follow-up packet to the second node through a third node. The first node receives one or more of the first delay request packet, the second delay response packet, or the second follow-up packet from the second node through the third node.

In this manner, in a scenario in which a relay node (for example, a third node) exists between the first node and the second node, clock synchronization between the first node and the second node can be implemented in an E2E manner, and efficiency of clock synchronization between the first node and the second node can be improved.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets. In other words, the first node and the second node communicate based on the gPTP.

In this manner, a gPTP protocol architecture may be adjusted from a hierarchical architecture to a tree architecture, so that the gPTP supports an E2E clock synchronization scenario.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further include a clock domain identifier, and the clock domain identifier indicates a clock domain.

In this way, accuracy of forwarding a packet by the third node in a multi-clock domain scenario can be improved.

In a possible design, a priority of forwarding the gPTP packet by the third node is higher than a priority of forwarding a precision time protocol PTP packet by the third node; and/or a priority of forwarding the gPTP packet by the third node is higher than a priority of forwarding a service packet by the third node.

In this way, it can be ensured that a gPTP packet is preferentially forwarded by the third node, and efficiency of gPTP-based clock synchronization can be further improved.

According to a second aspect, a packet transmission method is provided. The method includes: A third node receives a first delay request packet from a second node, and the third node sends the first delay request packet to a first node, where the first delay request packet is for requesting to measure a time delay between the first node and the second node, and a source address of the first delay request packet is an address of the second node. The third node receives a first delay response packet from the first node, and the third node sends the first delay response packet to the second node, where the first delay response packet includes first time information, the first time information indicates receiving time of the first delay request packet, and a destination address of the first delay response packet is the address of the second node. The first time information is for determining the time delay between the first node and the second node.

In a possible design, that a third node receives a first delay request packet from a second node includes: The third node receives the first delay request packet from a fourth node; or the third node receives the first delay request packet from the second node. That the third node sends the first delay response packet to the second node includes: The third node sends the first delay response packet to the second node; or the third node sends the first delay response packet to the fourth node, so that the fourth node sends a first delay packet to the second node.

In this manner, there may be one (for example, the third node) or more relay nodes (for example, the third node and the fourth node) between the first node and the second node, to improve flexibility of the solution.

In a possible design, the method further includes: The third node receives a first follow-up packet from the first node, and the third node sends the first follow-up packet to the second node, where the first follow-up packet includes second time information, the second time information indicates sending time of the first delay response packet, a destination address in the first follow-up packet is the address of the second node, and the second time information is for determining the time delay between the first node and the second node.

In a possible design, the method further includes: The third node receives a second delay request packet from the first node, and the third node sends the second delay request packet to the second node, where the second delay request packet is for requesting to measure the time delay between the first node and the second node. The third node receives a second delay response packet from the second node, and the third node sends the second delay response packet to the first node, where the second delay response packet includes third time information, the third time information indicates receiving time of the second delay request packet, and a source address of the second delay request packet is the address of the second node.

In a possible design, the method further includes: The third node receives a second follow-up packet from the second node, and the third node sends the second follow-up packet to the first node, where the second follow-up packet includes fourth time information, the fourth time information indicates sending time of the second delay response packet, and a source address of the second follow-up packet is the address of the second node.

In a possible design, the method further includes: The third node receives a first synchronization packet from the first node, and sends the first synchronization packet to the second node. The third node receives a third follow-up packet from the first node, and sends the third follow-up packet to the second node, where the third follow-up packet includes fifth time information, and the fifth time information indicates sending time of the first synchronization packet. The third node receives a second synchronization packet from the first node, and sends the second synchronization packet to the second node. The third node receives a fourth follow-up packet from the first node, and sends the fourth follow-up packet to the second node, where the fourth follow-up packet includes sixth time information, and the sixth time information indicates sending time of the second synchronization packet. The fifth time information and the sixth time information are for determining a clock frequency deviation between the first node and the second node.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further include a clock domain identifier, and the clock domain identifier indicates a clock domain. Correspondingly, the method further includes: The third node forwards one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet based on the clock domain identifier.

In a possible design, a priority of forwarding the gPTP packet by the third node is higher than a priority of forwarding a precision time protocol PTP packet by the third node; and/or a priority of forwarding the gPTP packet by the third node is higher than a priority of forwarding a service packet by the third node. Correspondingly, the method further includes: If the third node receives the PTP packet and/or the service packet when receiving the gPTP packet, the third node preferentially forwards the gPTP packet.

For beneficial effects corresponding to the designs in the second aspect, refer to the beneficial effects corresponding to the designs in the first aspect. Details are not described herein again.

According to a third aspect, a packet transmission method is provided. The method includes: The first node sends a second delay request packet to the second node, where the second delay request packet is for requesting to measure the time delay between the first node and the second node, and the second delay request packet corresponds to the address of the second node. The first node receives a second delay response packet from the second node, where the second delay response packet includes third time information, the third time information indicates receiving time of the second delay request packet, a source address of the second delay request packet is the address of the second node, and the second delay response packet corresponds to the address of the second node.

In a possible design, the method further includes: The first node receives a second follow-up packet from the second node, where the second follow-up packet includes fourth time information, the fourth time information indicates sending time of the second delay response packet, a source address of the second follow-up packet is the address of the second node, and the second follow-up packet corresponds to the address of the second node.

In a possible design, the method further includes: A first node receives a first delay request packet from a second node, where the first delay request packet is for requesting to measure a time delay between the first node and the second node, and a source address of the first delay request packet is an address of the second node. The first node sends a first delay response packet to the second node, where the first delay response packet includes first time information, the first time information indicates receiving time of the first delay request packet, and a destination address of the first delay response packet is the address of the second node. The first time information is for determining a time delay between the first node and the second node.

In a possible design, the method further includes: The first node sends a first follow-up packet to the second node, where the first follow-up packet includes second time information, the second time information indicates sending time of the first delay response packet, a destination address in the first follow-up packet is the address of the second node, and the second time information is for determining the time delay between the first node and the second node.

In a possible design, the method further includes: The first node sends a first synchronization packet to the second node. The first node sends a third follow-up packet to the second node, where the third follow-up packet includes fifth time information, and the fifth time information indicates sending time of the first synchronization packet. The first node sends a second synchronization packet to the second node. The first node sends a fourth follow-up packet to the second node, where the fourth follow-up packet includes sixth time information, and the sixth time information indicates sending time of the second synchronization packet. The fifth time information and the sixth time information are for determining a clock frequency deviation between the first node and the second node.

In a possible design, the first node sends one or more of the first delay response packet, the first follow-up packet, the second delay request packet, the first synchronization packet, the third follow-up packet, the second synchronization packet, or the fourth follow-up packet to the second node through a third node. The first node receives one or more of the first delay request packet, the second delay response packet, or the second follow-up packet from the second node through the third node.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further include a clock domain identifier, and the clock domain identifier indicates a clock domain.

In a possible design, a priority of forwarding the gPTP packet by the third node is higher than a priority of forwarding a precision time protocol PTP packet by the third node; and/or a priority of forwarding the gPTP packet by the third node is higher than a priority of forwarding a service packet by the third node.

For beneficial effects corresponding to the designs in the third aspect, refer to beneficial effects corresponding to the designs in the first aspect. Details are not described herein again.

According to a fourth aspect, a packet transmission apparatus is provided. The apparatus may include modules configured to perform the method according to any one of the first aspect or the possible designs of the first aspect.

In a possible design, the apparatus may include a receiving unit and a sending unit. The receiving unit is configured to receive a first delay request packet from a second node, where the first delay request packet is for requesting to measure a time delay between the first node in which the apparatus is located and the second node, and a source address of the first delay request packet is an address of the second node. The sending unit is configured to send a first delay response packet to the second node, where the first delay response packet includes first time information, the first time information indicates receiving time of the first delay request packet, and a destination address of the first delay response packet is the address of the second node. The first time information is for determining a time delay between the first node and the second node.

In a possible design, the sending unit is further configured to send a first follow-up packet to the second node, where the first follow-up packet includes second time information, the second time information indicates sending time of the first delay response packet, a destination address in the first follow-up packet is the address of the second node, and the second time information is for determining the time delay between the first node and the second node.

In a possible design, the sending unit is further configured to send a second delay request packet to the second node, where the second delay request packet is for requesting to measure the time delay between the first node and the second node, and the second delay request packet corresponds to the address of the second node. The receiving unit is further configured to receive a second delay response packet from the second node, where the second delay response packet includes third time information, the third time information indicates receiving time of the second delay request packet, a source address of the second delay request packet is the address of the second node, and the second delay response packet corresponds to the address of the second node.

In a possible design, the receiving unit is further configured to receive a second follow-up packet from the second node, where the second follow-up packet includes fourth time information, the fourth time information indicates sending time of the second delay response packet, a source address of the second follow-up packet is the address of the second node, and the second follow-up packet corresponds to the address of the second node.

In a possible design, the sending unit is further configured to: send a first synchronization packet to the second node; send a third follow-up packet to the second node, where the third follow-up packet includes fifth time information, and the fifth time information indicates sending time of the first synchronization packet; send a second synchronization packet to the second node; and send a fourth follow-up packet to the second node, where the fourth follow-up packet includes sixth time information, and the sixth time information indicates sending time of the second synchronization packet. The fifth time information and the sixth time information are for determining a clock frequency deviation between the first node and the second node.

In a possible design, the sending unit is specifically configured to send one or more of the first delay response packet, the first follow-up packet, the second delay request packet, the first synchronization packet, the third follow-up packet, the second synchronization packet, or the fourth follow-up packet to the second node through a third node. The receiving unit is specifically configured to receive one or more of the first delay request packet, the second delay response packet, or the second follow-up packet from the second node through the third node.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further include a clock domain identifier, and the clock domain identifier indicates a clock domain.

In a possible design, a priority of forwarding the gPTP packet by the third node is higher than a priority of forwarding a precision time protocol PTP packet by the third node; and/or a priority of forwarding the gPTP packet by the third node is higher than a priority of forwarding a service packet by the third node.

According to a fifth aspect, a packet transmission apparatus is provided. The apparatus may include the modules configured to perform the method according to any one of the second aspect or the possible designs of the second aspect.

In a possible design, the apparatus includes a receiving unit and a sending unit. The receiving unit is configured to receive a first delay request packet from a second node. The sending unit is configured to send the first delay request packet to a first node, where the first delay request packet is for requesting to measure a time delay between the first node and the second node, and a source address of the first delay request packet is an address of the second node. The receiving unit is further configured to receive a first delay response packet from the first node. The sending unit is further configured to send the first delay response packet to the second node, where the first delay response packet includes first time information, the first time information indicates receiving time of the first delay request packet, and a destination address of the first delay response packet is the address of the second node. The first time information is for determining the time delay between the first node and the second node.

In a possible design, when receiving the first delay request packet from the second node, the receiving unit is specifically configured to: receive the first delay request packet from a fourth node; or receive the first delay request packet from the second node. When sending the first delay response packet to the second node, the sending unit is specifically configured to: send the first delay response packet to the second node; or send the first delay response packet to the fourth node, so that the fourth node sends a first delay packet to the second node.

In a possible design, the receiving unit is further configured to receive a first follow-up packet from the first node. The sending unit is further configured to send the first follow-up packet to the second node, where the first follow-up packet includes second time information, the second time information indicates sending time of the first delay response packet, a destination address in the first follow-up packet is the address of the second node, and the second time information is for determining the time delay between the first node and the second node.

In a possible design, the receiving unit is further configured to receive a second delay request packet from the first node. The sending unit is further configured to send the second delay request packet to the second node, where the second delay request packet is for requesting to measure the time delay between the first node and the second node. The receiving unit is further configured to receive a second delay response packet from the second node. The sending unit is further configured to send the second delay response packet to the first node, where the second delay response packet includes third time information, the third time information indicates receiving time of the second delay request packet, and a source address of the second delay request packet is the address of the second node.

In a possible design, the receiving unit is further configured to receive a second follow-up packet from the second node. The sending unit is further configured to send the second follow-up packet to the first node, where the second follow-up packet includes fourth time information, the fourth time information indicates sending time of the second delay response packet, and a source address of the second follow-up packet is the address of the second node.

In a possible design, the receiving unit is further configured to receive a first synchronization packet from the first node. The sending unit is further configured to send the first synchronization packet to the second node. The receiving unit is further configured to receive a third follow-up packet from the first node. The sending unit is further configured to send the third follow-up packet to the second node, where the third follow-up packet includes fifth time information, and the fifth time information indicates sending time of the first synchronization packet. The receiving unit is further configured to receive a second synchronization packet from the first node. The sending unit is further configured to send the second synchronization packet to the second node. The receiving unit is further configured to receive a fourth follow-up packet from the first node. The sending unit is further configured to send the fourth follow-up packet to the second node, where the fourth follow-up packet includes sixth time information, and the sixth time information indicates sending time of the second synchronization packet. The fifth time information and the sixth time information are for determining a clock frequency deviation between the first node and the second node.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further include a clock domain identifier, and the clock domain identifier indicates a clock domain. The sending unit is further configured to forward one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet based on the clock domain identifier.

In a possible design, a priority of forwarding the gPTP packet by the third node in which the apparatus is located is higher than a priority of forwarding a precision time protocol PTP packet by the third node in which the apparatus is located; and/or a priority of forwarding the gPTP packet by the third node in which the apparatus is located is higher than a priority of forwarding a service packet by the third node in which the apparatus is located. The sending unit is further configured to: if the third node in which the apparatus is located receives the PTP packet and/or the service packet when receiving the gPTP packet, preferentially forward the gPTP packet.

According to a sixth aspect, a packet transmission apparatus is provided. The apparatus may include modules configured to perform the method according to any one of the third aspect or the possible designs of the third aspect.

In a possible design, the apparatus may include a receiving unit and a sending unit. The sending unit is configured to send a second delay request packet to the second node, where the second delay request packet is for requesting to measure the time delay between the first node and the second node, and the second delay request packet corresponds to the address of the second node. The receiving unit is configured to receive a second delay response packet from the second node, where the second delay response packet includes third time information, the third time information indicates receiving time of the second delay request packet, a source address of the second delay request packet is the address of the second node, and the second delay response packet corresponds to the address of the second node.

In a possible design, the receiving unit is further configured to receive a second follow-up packet from the second node, where the second follow-up packet includes fourth time information, the fourth time information indicates sending time of the second delay response packet, a source address of the second follow-up packet is the address of the second node, and the second follow-up packet corresponds to the address of the second node.

In a possible design, the receiving unit is further configured to receive the first delay request packet from the second node, where the first delay request packet is for requesting to measure a time delay between the first node in which the apparatus is located and the second node, and a source address of the first delay request packet is an address of the second node. The sending unit is further configured to send a first delay response packet to the second node, where the first delay response packet includes first time information, the first time information indicates receiving time of the first delay request packet, a destination address of the first delay response packet is the address of the second node. The first time information is for determining a time delay between the first node and the second node.

In a possible design, the sending unit is further configured to send a first follow-up packet to the second node, where the first follow-up packet includes second time information, the second time information indicates sending time of the first delay response packet, a destination address in the first follow-up packet is the address of the second node, and the second time information is for determining the time delay between the first node and the second node.

In a possible design, the sending unit is further configured to: send a first synchronization packet to the second node; send a third follow-up packet to the second node, where the third follow-up packet includes fifth time information, and the fifth time information indicates sending time of the first synchronization packet; send a second synchronization packet to the second node; and send a fourth follow-up packet to the second node, where the fourth follow-up packet includes sixth time information, and the sixth time information indicates sending time of the second synchronization packet. The fifth time information and the sixth time information are for determining a clock frequency deviation between the first node and the second node.

In a possible design, the sending unit is specifically configured to send one or more of the first delay response packet, the first follow-up packet, the second delay request packet, the first synchronization packet, the third follow-up packet, the second synchronization packet, or the fourth follow-up packet to the second node through a third node. The receiving unit is specifically configured to receive one or more of the first delay request packet, the second delay response packet, or the second follow-up packet from the second node through the third node.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further include a clock domain identifier, and the clock domain identifier indicates a clock domain.

In a possible design, a priority of forwarding the gPTP packet by the third node is higher than a priority of forwarding a precision time protocol PTP packet by the third node; and/or a priority of forwarding the gPTP packet by the third node is higher than a priority of forwarding a service packet by the third node.

According to a seventh aspect, a packet transmission apparatus is provided. The apparatus includes a processor and an interface circuit. The interface circuit is configured to receive a signal from another apparatus other than the apparatus and transmit the signal to the processor, or send a signal from the processor to another communications apparatus other than the apparatus. The processor is configured to implement the method according to the first aspect, any possible design of the first aspect, the second aspect, any possible design of the second aspect, the third aspect, or any possible design of the third aspect.

According to an eighth aspect, a computer-readable storage medium is provided, including a program or instructions. When the program or the instructions run on a computer, the method according to the first aspect, any possible design of the first aspect, the second aspect, any possible design of the second aspect, the third aspect, or any possible design of the third aspect is performed.

According to a ninth aspect, a packet transmission system is provided, including the apparatus according to the fourth aspect or the sixth aspect and the apparatus according to the fifth aspect.

According to a tenth aspect, a vehicle is provided, and includes the apparatus according to any one of the fourth aspect to the seventh aspect, the computer-readable storage medium according to the eighth aspect, or the system according to the ninth aspect.

### BRIEF DESCRIPTION OF DRAWINGS

FIG. 1 is a schematic diagram of a scenario to which an embodiment of this application is applicable;
FIG. 2 is a schematic diagram of a PTP-based network architecture;
FIG. 3 is a schematic diagram of a gPTP-based network architecture;
FIG. 4 is a flowchart of a packet transmission method according to an embodiment of this application;
FIG. 5 is a flowchart of another packet transmission method according to an embodiment of this application;
FIG. 6 is a schematic diagram of a gPTP-based network architecture according to this application;
FIG. 7 is a schematic diagram of another gPTP-based network architecture according to this application;
FIG. 8 is a schematic diagram of two clock domains;
FIG. 9 is a schematic diagram of a structure of a packet transmission apparatus according to this application; and
FIG. 10 is a schematic diagram of a structure of another packet transmission apparatus according to this application.

### DESCRIPTION OF EMBODIMENTS

Some terms in this application are first described below.
(1) Clock synchronization includes time synchronization and frequency synchronization. Clock synchronization between a node A and a node B is used as an example. Time synchronization is that at a same moment, time of the node A and time of the node B need to be the same, which is similar to adjusting time of a watch. For example, the time of the node A is 1:00 a.m. on November 26, 2021, and the time of the node B is also 1:00 a.m. on November 26, 2021. Frequency synchronization is that a clock of the node A and a clock of the node B need to run at a same frequency. For example, a crystal oscillator frequency of the node A is the same as a crystal oscillator frequency of the node B, which is similar to adjusting timing precision of a watch. When the clock of the node A and the clock of the node B run at a same frequency, in a same time period, a count quantity of the clock of the node A is the same as a count quantity of the clock of the node B, and a time increased value of the node A is the same as a time increased value of the node B. For example, the time of the node A is increased by 20s, and the time of the node B is also increased by 20s.
(2) Grandmaster node and slave node: When clock synchronization is performed between any two nodes, the node whose clock needs to be adjusted is a slave node, and the other node is a grandmaster node. In other words, the slave node adjusts the local clock with reference to a clock of the grandmaster node.
(3) A clock domain is an area controlled by a same clock signal in a circuit, or in other words, a clock domain is formed by a plurality of nodes that refer to a same time reference. One system may have one clock domain, or one system may have a plurality of clock domains at the same time. This is not limited in this application.

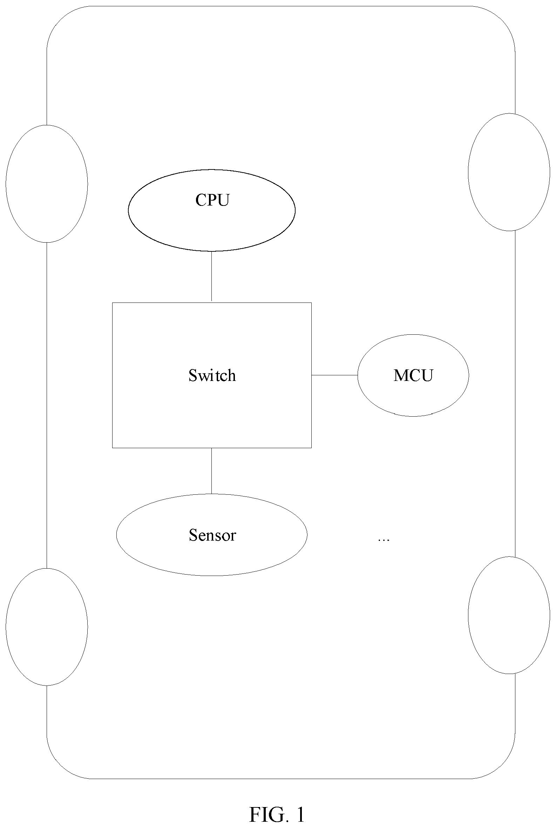

Embodiments of this application may be applied to any scenario in which clock synchronization needs to be performed. FIG. 1 is a schematic diagram of a scenario to which an embodiment of this application is applicable. The scenario is a scenario of time synchronization of an in-vehicle system. As shown in FIG. 1, the in-vehicle system includes a microcontroller unit (Microcontroller Unit, MCU), a sensor (such as a laser radar or a camera), a central processing unit (Central Processing Unit, CPU), and the like. The switch may be separately connected to the CPU, the sensor, the MCU, and the like by an Ethernet (Ethernet, ETH) interface, so that the CPU, the sensor, the MCU, and the like are interconnected. The switch may be specifically an Ethernet switch integrated in an electronic control unit (Electronic Control Unit, ECU) in the in-vehicle system. Clocks of devices (for example, the CPU, the MCU, and the sensor) in the in-vehicle system need to be synchronized.

It should be understood that FIG. 1 shows only some devices in the in-vehicle system, and certainly may further include another device (for example, an audio player or a video player). This is not limited in this application. In addition, in FIG. 1, an example in which the CPU, the MCU, the sensor, and the like are connected to each other by a switch is used. During actual application, the CPU, the MCU, the sensor, and the like may also be directly connected to each other. This is not limited in this application.

In a possible implementation, clock synchronization may be performed between devices in the in-vehicle system by using the precision time protocol (Precision Time Protocol, PTP). In the PTP protocol, a related packet used for clock synchronization may be referred to as a PTP packet.

A grandmaster clock (Grandmaster Clock), a slave clock (Slave Clock), and a transparent clock (Transparent Clock) are defined in the PTP. The grandmaster clock is a time reference of an entire clock domain, the slave clock needs to be kept synchronized with the grandmaster clock, and the transparent clock does not need to be synchronized with the grandmaster clock or the slave clock.

Nodes in the PTP may include an endpoint (endpoint) node and a bridge (Bridge) node. A clock of the endpoint node can be used as the grandmaster clock or slave clock in the system. When the clock of the endpoint node is used as the grandmaster clock, the endpoint node is used as a grandmaster node, and the grandmaster clock may be used as a reference clock of the slave node. When the clock of the endpoint node is used as the slave clock, the endpoint node is used as the slave node and may adjust the local clock based on the grandmaster clock. A clock of the bridge node is the transparent clock. The bridge node may be used as a relay node to connect to other nodes in a network, and forward a packet to the other nodes. In addition, the bridge node may calculate residence time (namely, a forwarding delay) of the packet in the bridge node.

For example, in the scenario shown in FIG. 1, the CPU, the MCU, and the sensor may be used as endpoint nodes, and the switch is a relay device for the CPU, the MCU, the sensor, or the like, and may not participate in clock synchronization. Therefore, the switch may be used as a bridge node. Further, the CPU may be used as the grandmaster node, in other words, a clock of the CPU may be used as the grandmaster clock. The MCU and the sensor may be used as slave nodes, in other words, clocks of the MCU and the sensor may be slave clocks. Certainly, this is merely an example, but does not constitute a specific limitation.

Further, a port for the grandmaster node to publish time information may be referred to as a master port (Master Port). The grandmaster node may send a PTP packet to a downstream node through the master port. The PTP packet carries time information of the grandmaster clock, so that a slave node may perform clock synchronization based on the PTP packet. A port for receiving time information of the slave node may be referred to as a slave port (Slave Port). The slave node may receive a PTP packet from an upstream node through the slave port, and perform a clock synchronization operation based on the time information of the grandmaster clock carried in the PTP packet. The bridge node may have a plurality of ports, and these ports may be referred to as transparent ports (Transparent Port). The bridge node may forward a PTP packet between these transparent ports, to forward a packet received from one port node to another port node.

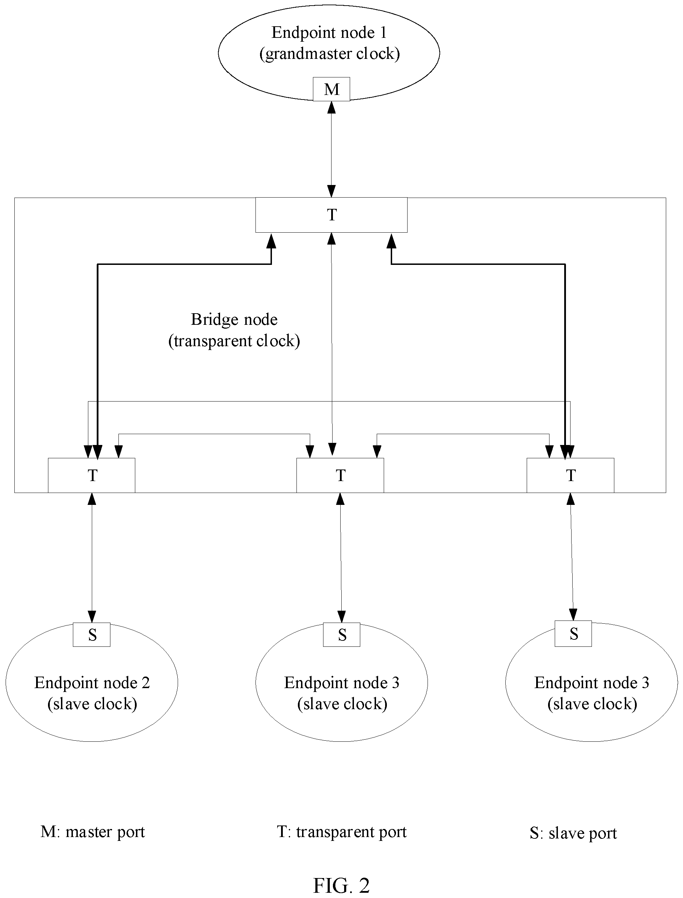

The PTP protocol is an end-to-end (End-to-End, E2E) protocol, in other words, clock synchronization is directly performed between endpoint nodes. FIG. 2 is a schematic diagram of a PTP-based network architecture. The network architecture is a mesh architecture, and includes a plurality of endpoint nodes (four endpoint nodes are used as an example in FIG. 2). A clock of an endpoint node 1 is a grandmaster clock, in other words, the endpoint node 1 is a grandmaster node. Clocks of endpoint nodes 2, 3, and 4 are slave clocks, in other words, the endpoint nodes 2, 3, and 4 are slave nodes. In addition, at least one bridge node is further included (in FIG. 2, one bridge node is used as an example, and in practice this application is not limited thereto).

During synchronization, the slave nodes (for example, the endpoint nodes 2, 3, and 4) may send PTP packets to the grandmaster node in a multicast manner. Specifically, the slave node sends the PTP packet to the bridge node through a slave port. After the PTP packet reaches the bridge node, the bridge node forwards the PTP packet between transparent ports, to send the PTP packet to the grandmaster node. The grandmaster node may send a PTP packet to the slave nodes in a multicast manner. Specifically, the grandmaster node multicasts the PTP packet on a master port of the grandmaster node. After the PTP packet reaches a transparent port connected to the master port of the grandmaster node in the bridge node, the bridge node forwards the PTP packet between the transparent ports, to send the PTP packet to the slave nodes (for example, the endpoint nodes 2, 3, and 4) connected to the transparent ports. It should be understood that FIG. 2 shows only a single-stage bridge node (namely, there is only one bridge node between the grandmaster node and the slave node). Alternatively, the bridge node may be actually a multi-stage bridge node (namely, there are only a plurality of bridge nodes between the grandmaster node and the slave node). This is not limited in this application.

This solution has the following technical disadvantages:
(1) After a PTP packet between a slave node and the grandmaster node reaches the bridge node, the bridge node forwards the PTP packet between all transparent ports. Therefore, other slave nodes also receive the PTP packet, causing heavy network load.
(2) The PTP supports only active initiation of a delay measurement request by a slave node, and only the slave node can measure a time delay between the grandmaster node and the slave node. Active initiation of a delay measurement request by the grandmaster node is not supported, and the grandmaster node cannot learn the time delay between the grandmaster node and the slave node. This is unfavorable for management of a connection status of the slave node by the grandmaster node.
(3) The bridge node needs to support calculation of a residence time of a PTP packet, resulting in high costs.
(4) All PTP packets are transmitted in a multicast manner. The grandmaster node and the slave nodes can only measure a delay or clock frequency deviation in a one-to-one manner. As a result, efficiency of clock synchronization is low.

In another possible implementation, time synchronization may be performed between devices in the in-vehicle system by using the generalized precision time protocol (Generalized Precision Time Protocol, gPTP). In the gPTP protocol, a related packet used for clock synchronization may be referred to as a gPTP packet.

A grandmaster clock (Grandmaster Clock) and a slave clock (Slave Clock) are defined in the gPTP. For definitions of the grandmaster clock and the slave node, refer to related definitions in the PTP. Details are not described herein again.

Nodes in the gPTP also include an endpoint (endpoint) node and a bridge (Bridge) node. For a definition of the endpoint node, refer to a related definition in the PTP. Details are not described herein again.

Different from the PTP, the gPTP is a point-to-point (Point to Point, PTP) protocol. Clock synchronization can only be performed between two adjacent nodes. Therefore, a bridge node needs to participate in clock synchronization. During synchronization, the bridge node may adjust the local clock with reference to a clock of another node. In this case, the bridge node is equivalent to a slave node. Alternatively, another node adjusts the local clock with reference to a clock of the bridge node. In this case, the bridge node is equivalent to a grandmaster node. When the bridge node is used as a slave node to perform clock synchronization with another node, a port participating in packet transmission in the bridge node is a slave port. When the bridge node is used as a grandmaster node to perform clock synchronization with another node, a port participating in packet transmission in the bridge node is a master port.

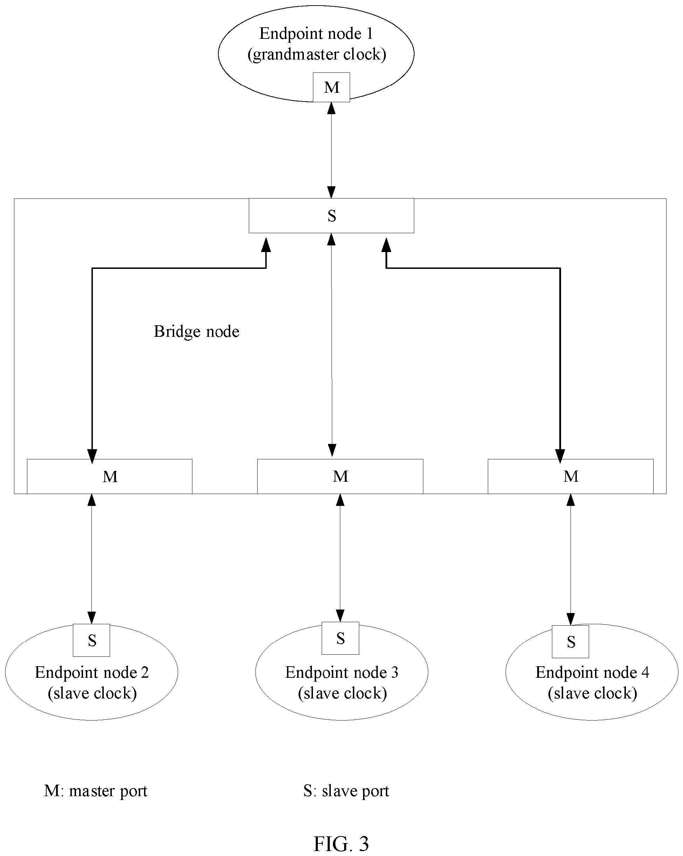

FIG. 3 is a schematic diagram of a gPTP-based network architecture. The network architecture is a hierarchical architecture. An endpoint node 1 is the most upstream node, and the most upstream node is used as a grandmaster node. A clock of the most upstream node is a grandmaster clock and is a time reference of an entire network. Endpoint nodes 2, 3, and 4 are used as most downstream nodes, and the most downstream nodes are used as slave nodes. Clocks of the most downstream nodes are used as slave clocks. Abridge node is a relay node. When the bridge node provides a service to an upstream node adjacent to the bridge node, the bridge node is used as a slave node, and a port of the bridge node for communication with the upstream node adjacent to the bridge node is a slave port. When the bridge node provides a service to a downstream node adjacent to the bridge node, the bridge node is used as a grandmaster node, and a port of the bridge node for communication with the downstream node adj acent to the bridge node is a master port. During synchronization, clock synchronization is performed between two adjacent nodes from top to bottom. For example, the endpoint node 1 first synchronizes a clock to the bridge node, and then the bridge node synchronizes the clock to the endpoint nodes 2, 3, and 4 separately.

It may be understood that, in a synchronization process, although the bridge node is used as a grandmaster node or a slave node, the time reference of the entire network is, in principle, the clock of the most upstream node, that is, a clock node 1. A final purpose of the entire synchronization process is to synchronize the clocks of the most downstream nodes (the endpoint nodes 2, 3, and 4) with the clock of the most upstream node. For clearer understanding and description, in this specification, the most upstream node (the endpoint node 1) is defined as a grandmaster clock node, and the most downstream nodes (the endpoint nodes 2, 3, and 4) are defined as slave clock nodes.

It should be understood that FIG. 3 shows only a single-stage bridge node (namely, there is only one bridge node between the grandmaster node and a slave node), and may be actually a multi-stage bridge node (namely, there are only a plurality of bridge nodes between the grandmaster node and a slave node). This is not limited in this application.

This solution has the following technical disadvantages:
(1) Clock synchronization is performed only between two adjacent nodes. Therefore, all nodes in the system need to support the P2P communication capability, which limits application scenarios and increases hardware costs.
(2) When a fault occurs in the endpoint node 1, none of the endpoint nodes 2, 3, and 4 can sense the fault in the endpoint node 1. Clock errors between the endpoint nodes 2, 3, and 4 and the endpoint node 1 gradually accumulate, and reliability of clock synchronization is poor.
(3) If roles of nodes connected to the ports of the bridge node are switched, a network topology of the ports of the bridge node is changed accordingly (the original master port is changed to the slave port, or the original slave port is changed to the master port), which increases a network convergence time and reduces efficiency of clock synchronization.
(4) Clock synchronization is performed between two adjacent nodes. It takes a long time to synchronize the clock from the grandmaster clock node (the most upstream node) to the slave clock node (the most downstream node), and the efficiency of clock synchronization is low.

To resolve the foregoing one or more technical problems, technical solutions of this application are provided.

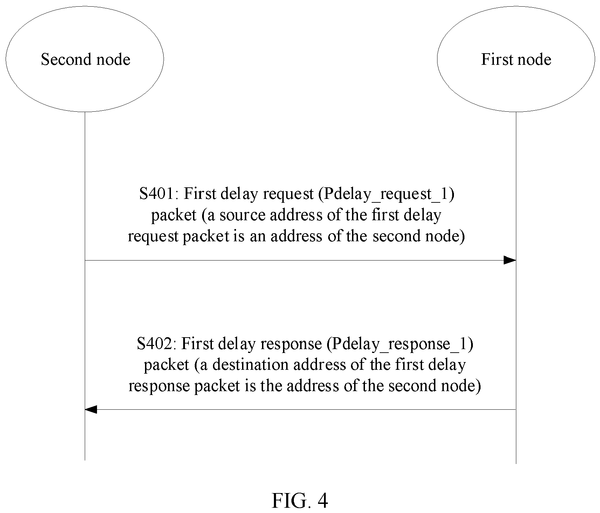

FIG. 4 shows a packet transmission method according to an embodiment of this application. The method includes the following steps.

S401: A second node sends a first delay request packet to a first node, and the first node receives the first delay request (for example, Pdelay_request_1) packet from the second node.

The first delay request packet is for requesting to measure a time delay between the first node and the second node, and the time delay is a time elapsed when information is transmitted from the first node to the second node (or transmitted from the second node to the first node).

A source address of the first delay request packet is an address of the second node, and a destination address of the first delay request packet is a multicast address. In other words, the first delay request packet is a multicast packet. Further, the multicast address may be an address corresponding to a clock domain, and the clock domain is a clock domain formed by a plurality of nodes including the first node and the second node.

It may be understood that both the first node and the second node are endpoint nodes, the second node is a node whose clock needs to be adjusted, and a clock of the first node is a time reference of the clock domain in which the first node is located.

The scenario shown in FIG. 1 is used as an example. A CPU, an MCU, and a sensor form a clock domain. The first node may be the CPU, and the second node may be the MCU or the sensor.

S402: The first node sends a first delay response (for example, Pdelay_response_1) packet to the second node, and the second node receives the first delay response packet from the first node.

A source address of the first delay response packet is an address of the first node, and a destination address of the first delay response packet is the address of the second node. In other words, the first delay response packet is a unicast packet.

The first delay response packet includes first time information, and the first time information indicates receiving time of the first delay request packet. The first time information is for determining the time delay between the first node and the second node. For example, the second node may determine the time delay between the first node and the second node based on the first time information.

It may be understood that the first time information may indicate an absolute time value, or may indicate a relative time value. This is not limited in embodiments of this application. For example, the first time information is a quantity of seconds (for example, 1639411230 seconds) elapsed from January 1, 1970 (midnight of International Coordinated Time (UTC)/Greenwich Mean Time (GMT)) to time at which the first node receives the first delay request packet. Alternatively, for example, the first time information is regional time (for example, 0:0:30 a.m., December 14, 2021, Beijing time) at which the first node receives the first delay request packet. Alternatively, for example, the first time information is a time difference (for example, 1 second) between a moment at which the first node receives the first request packet and a moment at which the second node sends the first request packet. Certainly, the foregoing values are merely examples, and cannot be used to represent real time during actual application.

Further, the first node and the second node may transmit packets based on the PTP, the gPTP, or another time protocol. This is not limited in this application. When the first node and the second node transmit packets based on the PTP, the first node is a grandmaster (Grandmaster) node (the endpoint node 1 shown in FIG. 2), and the second node is a slave (Slave) node (the endpoint node 2, the endpoint node 3, or the endpoint node 4 shown in FIG. 2). When the first node and the second node transmit packets based on the gPTP protocol, the first node is a grandmaster clock node (the endpoint node 1 shown in FIG. 3), and the second node is a slave clock node (the endpoint node 2, the endpoint node 3, or the endpoint node 4 shown in FIG. 3).

It may be understood that a type of an address (a source address or a destination address) in embodiments of this application may be any address type that can be used to identify a node, for example, a media access control (Media Access Control, MAC) address or an internet protocol (Internet Protocol, IP) address. This is not limited in this application.

It should be understood that interaction between the first node and the second node is used as an example above. During actual application, the first node may interact with a plurality of nodes at the same time. For a process of interaction between the first node and each node in the plurality of nodes, refer to the foregoing process of S401 and S402. Details are not described herein again.

According to S401 and S402, the first delay response packet can be transmitted between two endpoint nodes in a form of a unicast packet (namely, transmitted in an E2E manner). Compared with the solution shown in FIG. 2, the first delay response packet in embodiments of this application is a unicast packet, to avoid a problem that network load is heavy because the first delay response packet reaches another node that the first delay response packet does not need to reach. Compared with the solution shown in FIG. 3, in embodiments of this application, the first delay response packet is transmitted between the first node and the second node in an E2E manner. In an aspect, the bridge node does not need to support a P2P capability, and therefore hardware costs can be reduced. In another aspect, clock synchronization is directly performed between the first node and the second node, and therefore efficiency of clock synchronization can be improved. In addition, the second node can sense a status of the first node in time, so that network security performance is improved.

In a possible implementation, the first node further sends a first follow-up (for example, follow_up_1) packet to the second node, where the first follow-up packet includes second time information, and the second time information indicates sending time of the first delay response packet. A source address in the first follow-up packet is the address of the first node, and a destination address in the first follow-up packet is the address of the second node. In other words, the first follow-up packet is a unicast packet. The second time information is for determining the time delay between the first node and the second node. For example, the second node may determine the time delay between the first node and the second node based on the first time information and the second time information.

The first follow-up packet follows the first delay response packet, and indicates sending time of the first delay response packet. Therefore, the first follow-up packet may also be referred to as a first delay response follow-up (for example, Pdelay_response_follow_up_1) packet.

It may be understood that the second time information may indicate an absolute time value, or may indicate a relative time value. This is not limited in embodiments of this application.

Further, the second node may record time at which the second node sends the first delay request packet and time at which the second node receives the first delay response packet. After obtaining, based on the first delay response packet, time at which the first node receives the first delay request packet, and obtaining, based on the first follow-up packet, time at which the first node sends the first delay response packet, the second node may determine the time delay between the first node and the second node with reference to the time at which the second node sends the first delay request packet and the time at which the second node receives the first delay response packet.

For example, if the time at which the second node sends the first delay request packet is 11, the time at which the first node receives the first delay request packet is t2, the time at which the first node sends the first delay response packet is t3, and the time at which the second node receives the first delay response packet is t4, the time delay between the first node and the second node may be Δt = [(t4 - 11) - (t3 - t2)]/2.

After obtaining the time delay between the first node and the second node, the second node may calibrate the local clock of the second node with reference to time information (for example, local time of the first node, specifically, local time at which the first node releases clock information) released by the first node and the time delay between the first node and the second node. There is a delay (namely, the time delay between the first node and the second node) when the time information released by the first node is transmitted to the second node, and the time information expires when reaching the second node. Therefore, the time information needs to be corrected by using the time delay between the first node and the second node, and then the time of the local clock is adjusted based on the corrected time information, to ensure accuracy of time synchronization in clock synchronization.

In this manner, the first node can transmit the first follow-up packet to the second node in a form of a unicast packet, to further reduce network load, reduce hardware costs, and improve efficiency of clock synchronization. The second node may obtain the time delay between the first node and the second node, to adjust the time of the local clock.

An example in which the second node measures the time delay between the first node and the second node is used above. In embodiments of this application, the first node may measure the time delay between the first node and the second node.

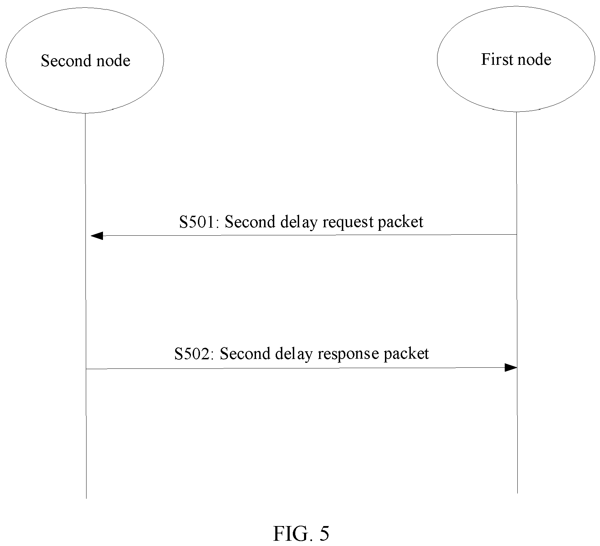

FIG. 5 shows another packet transmission method according to an embodiment of this application. The method includes the following steps.

S501: A first node sends a second delay request (for example, Pdelay_request_2) packet to a second node, and correspondingly, the second node receives the second delay request packet from the first node.

The second delay request packet is for requesting to measure a time delay between the first node and the second node.

It may be understood that both the first node and the second node are endpoint nodes, the second node is a node whose clock needs to be adjusted, and the first node is a node whose clock is used as a time reference. For example, the first node is the endpoint node 1 shown in FIG. 2, and the second node is the endpoint node 2, the endpoint node 3, or the endpoint node 4 shown in FIG. 2. Alternatively, the first node is the endpoint node 1 shown in FIG. 3, and the second node is the endpoint node 2, the endpoint node 3, or the endpoint node 4 shown in FIG. 3. For related definitions of the first node and the second node, refer to related descriptions of the first node and the second node in S401 and S402. Details are not described herein again.

A source address of the second delay request packet is an address of the first node. Optionally, the second delay request packet is a multicast packet, in other words, a destination address of the second delay request packet is a multicast address. For example, the multicast address may be an address corresponding to a clock domain, and the clock domain is a clock domain formed by a plurality of nodes including the first node and the second node. Alternatively, the second delay request packet is a unicast packet, in other words, a destination address of the second delay request packet is an address of the second node. This is not limited in this application.

The second delay request packet corresponds to the address of the second node.

The first node may maintain a correspondence between the second delay request packet and the address of the second node.

In a possible design, the first node stores the second delay request packet, and adds identification information to the second delay request packet by using the address of the second node. For example, the first node creates a first table. The address of the second node is used as the identification information in the first table, and the first node stores the second delay request packet in the first table. Certainly, the table is merely an example. The first node may alternatively store the first delay request packet in another manner, for example, a folder or a database. The folder or the database is identified by using the address of the second node.

Further, the first node may further store time information of sending the second delay request packet by the first node. For example, time at which the first node sends the second delay request packet is stored in the first table.

Table 1 is an example of the first table. In Table 1, an example in which a CPU is the first node and a sensor is the second node is used.

**Table 1**

| Address | Packet sent by the CPU | Time at which the CPU sends the packet | Packet received by the CPU | Time at which the CPU receives the packet |
|---|---|---|---|---|
| Address of the sensor: 00-16-EA-AE-3C-40 | Pdelay_request_1 | t5 | Pdelay_response_1 | t6 |

It should be understood that Table 1 is merely an example. A specific form of the first table is not limited in embodiments of this application.

It should be noted that a sequence of sending the second delay request packet by the first node and storing the correspondence between the second delay request packet and the address of the second node is not limited in this application. In other words, the first node may first send the second delay request packet to the second node, and then store the correspondence between the second delay request packet and the address of the second node. Alternatively, the first node may first store the correspondence between the second delay request packet and the address of the second node, and then send the second delay request packet to the second node. Alternatively, the first node may store the correspondence between the second delay request packet and the address of the second node when sending the second delay request packet to the second node.

S502: The second node sends a second delay response (for example, Pdelay_response_2) packet to the first node, and correspondingly, the first node receives the second delay response packet from the second node.

Specifically, after receiving the second delay request packet, the second node returns the second delay response packet to the first node in response to the second delay request packet, where the second delay response packet carries the third time information, and the third time information indicates receiving time of the second delay request packet.

It may be understood that the third time information may indicate an absolute time value, or may indicate a relative time value. This is not limited in embodiments of this application.

A source address of the second delay response packet is the address of the second node. Optionally, the second delay response packet is a multicast packet, in other words, a destination address of the second delay response packet is a multicast address. For example, the multicast address may be an address of a clock domain in which the corresponding first node is located. Alternatively, the second delay response packet is a unicast packet, in other words, the destination address of the second delay response packet is the address of the first node. This is not limited in this application.

The first node may maintain a correspondence between the second delay response packet and the address of the second node.

In a possible design, the first node stores the second delay response packet, and adds identification information to the second delay response packet by using the address of the second node. For example, the first node stores the second delay response packet in the first table.

The first node may further store time information of receiving the second delay response packet by the first node. For example, the time at which the first node receives the second delay response packet is stored in the first table.

It should be understood that interaction between the first node and the second node is used as an example above. During actual application, the first node may interact with a plurality of nodes at the same time. For a process of interaction between the first node and each node in the plurality of nodes, refer to the foregoing process of S501 and S502. Details are not described herein again. Packets exchanged between the first node and different nodes may be stored in a same table (or a folder or a database), or may be separately stored in different tables (or folders or databases). This is not limited in this application.

Table 2 shows another example of the first table, and records information about a packet exchanged between the CPU and the sensor and information about a packet exchanged between the CPU and the MCU.

**Table 2**

| Address | Packet sent by the CPU | Time at which the CPU sends the packet | Packet received by the CPU | Time at which the CPU receives the packet |
|---|---|---|---|---|
| Address of the sensor: 00-16-EA-AE-3C-40 | Pdelay_request_1 | t5 | Pdelay_response_1 | t6 |
| Address of the MCU: 00-16-EA-AB-3C-41 | Pdelay_request_2 | t7 | Pdelay_response_2 | t8 |
| ... | | | | |

It may be understood that t5 may be the same as or different from t7, and t6 may be the same as or different from t8.

It may be understood that the first node and the second node may transmit packets based on the PTP, the gPTP, or another time protocol. This is not limited in this application. When the first node and the second node transmit packets based on the PTP, the first node is the grandmaster node (the endpoint node 1 shown in FIG. 2), and the second node is the slave node (the endpoint node 2, the endpoint node 3, or the endpoint node 4 shown in FIG. 2). When the first node and the second node transmit packets based on the gPTP protocol, the first node is the grandmaster clock node (the endpoint node 1 shown in FIG. 3), and the second node is the slave clock node (the endpoint node 2, the endpoint node 3, or the endpoint node 4 shown in FIG. 3).

According to S501 and S502, the first node may measure the time delay between the first node and the second node, to help the first node manage a connection status of the second node. In addition, in this solution, the first node may correspond a packet corresponding to the second node to the address of the second node, so that the first node distinguishes the packet corresponding to the second node from another packet. By analogy, the first node may maintain a connection status between the first node and a plurality of nodes, and distinguish between packets corresponding to different nodes, so that the first node can perform delay measurement on the plurality of nodes, to improve measurement efficiency.

In a possible implementation, the second node may further send a second follow-up packet to the first node. Correspondingly, the first node receives the second follow-up packet from the second node. The second follow-up packet includes fourth time information, and the fourth time information indicates sending time of the second delay response packet. The second follow-up packet of the first node corresponds to the address of the second node. A source address of the second follow-up packet is the address of the second node. A destination address of the second follow-up packet is a multicast address or the address of the first node. This is not limited in this application. For a specific manner in which the first node corresponds the second follow-up packet to the address of the second node, refer to the foregoing specific manner in which the first node corresponds the second delay request packet and the second delay response packet to the address of the second node. Details are not described herein again.

The second follow-up packet follows the second delay response packet and indicates the sending time of the second delay response packet. Therefore, the second follow-up packet may also be referred to as a second delay response follow-up (for example, Pdelay_response_follow_up_2) packet.

It may be understood that the fourth time information may indicate an absolute time value, or may indicate a relative time value. This is not limited in embodiments of this application.

Further, the first node may determine the time delay between the first node and the second node based on the time at which the first node sends the second delay request packet, time at which the second node receives the second delay request packet, time at which the second node sends the second delay response packet, and the time at which the first node receives the second delay response packet. For a specific method, refer to the foregoing method for determining, by the second node, the time delay between the first node and the second node.

In this manner, the first node may obtain the time delay between the first node and the second node.

It may be understood that the solutions shown in S401 and S402 and the solutions shown in S501 and S502 may be separately implemented, or may be implemented in combination with each other. This is not limited in this application. When the two solutions are implemented in combination, beneficial effects of separately implementing the two solutions are achieved at the same time.

A solution for measuring the time delay between the first node and the second node is described above, and a solution for measuring a clock frequency deviation between the first node and the second node is described below.

In a possible design, the first node sends a first synchronization (for example, sync_1) packet to the second node, and correspondingly, the second node receives the first synchronization packet. The first node sends a third follow-up (for example, follow_up_1) packet to the second node, and correspondingly, the second node receives the third follow-up packet. The third follow-up packet includes fifth time information, and the fifth time information indicates sending time of the first synchronization packet. The first node sends a second synchronization (for example, sync_2) packet to the second node, and correspondingly, the second node receives the second synchronization packet. The first node sends a fourth follow-up (for example, follow_up_2) packet to the second node, and correspondingly, the second node receives the fourth follow-up packet. The fourth follow-up packet includes sixth time information. The sixth time information indicates sending time of the second synchronization packet. Therefore, the second node may calculate the clock frequency deviation between the first node and the second node based on time at which the first node sends the first synchronization packet, time at which the second node receives the second node, time at which the first node sends the second synchronization packet, and time at which the second node receives the second synchronization packet.

It may be understood that the fifth time information and the fifth time information may indicate an absolute time value, or may indicate a relative time value. This is not limited in embodiments of this application.

For example, it is assumed that the time at which the first node sends the first synchronization packet is t9, the time at which the second node receives the second node is t10, the time at which the first node sends the second synchronization packet is t11, and the time at which the second node receives the second synchronization packet is t12. The clock frequency deviation between the first node and the second node may be Δf = (t11 - t9)/(t12 - t10).

After obtaining the clock frequency deviation between the first node and the second node, the second node may adjust a frequency of the local clock based on the clock frequency deviation between the first node and the second node, to implement frequency synchronization between a clock of the first node and a clock of the second node.

It may be understood that in embodiments of this application, if the first node and the second node are directly connected, the first node and the second node may directly interact with each other. If there is another node, for example, a third node, between the first node and the second node, the first node and the second node need to forward a packet through the another node.

The scenario shown in FIG. 1 is used as an example. The first node is the CPU, the second node is the sensor or the MCU, and the third node is the switch.

In a possible design, the first node may send one or more of the first delay response packet, the first follow-up packet, the second delay request packet, the first synchronization packet, the third follow-up packet, the second synchronization packet, or the fourth follow-up packet to the second node through a third node. Correspondingly, the second node receives one or more of the first delay response packet, the first follow-up packet, the second delay request packet, the first synchronization packet, the third follow-up packet, the second synchronization packet, or the fourth follow-up packet from the first node through the third node. For example, the first delay response packet is used as an example. The first node first sends the first delay response packet to the third node, and after receiving the first delay response packet, the third node sends the first delay response packet to the second node.

Further, the second node may send one or more of the first delay request packet, the second delay response packet, or the second follow-up packet to the second node through the third node. Correspondingly, the first node receives one or more of the first delay request packet, the second delay response packet, or the second follow-up packet from the second node through the third node. For example, the first delay request packet is used as an example. The second node may first send the first delay request packet to the third node, and the third node receives the first delay request packet, and sends the first delay request packet to the first node.

It may be understood that in embodiments of this application, if there are a plurality of nodes between the first node and the second node, a packet needs to be forwarded by the plurality of nodes in sequence. For example, the first node is connected to the third node, the third node is connected to the fourth node, and the fourth node is connected to the second node. After being sent by the first node, the first delay response packet, the first follow-up packet, the second delay request packet, the first synchronization packet, the third follow-up packet, the second synchronization packet, the fourth follow-up packet, or the like is first forwarded by the third node to the fourth node, and is then forwarded by the fourth node to the second node. Similarly, after being sent by the second node, the first delay request packet, the second delay response packet, the second follow-up packet, or the like is first forwarded by the fourth node to the third node, and is then forwarded by the third node to the second node.

The scenario shown in FIG. 1 is used as an example. The first node is the CPU, the second node is the sensor or the MCU, and the third node and the fourth node are two different switches.

In a possible design, the first node, the second node, and the third node communicate with each other by using the gPTP. In other words, one or more of the first delay response packet, the first follow-up packet, the second delay request packet, the first synchronization packet, the third follow-up packet, the second synchronization packet, the fourth follow-up packet, the first delay request packet, the second delay response packet, the second follow-up packet, or the like may be gPTP packets.

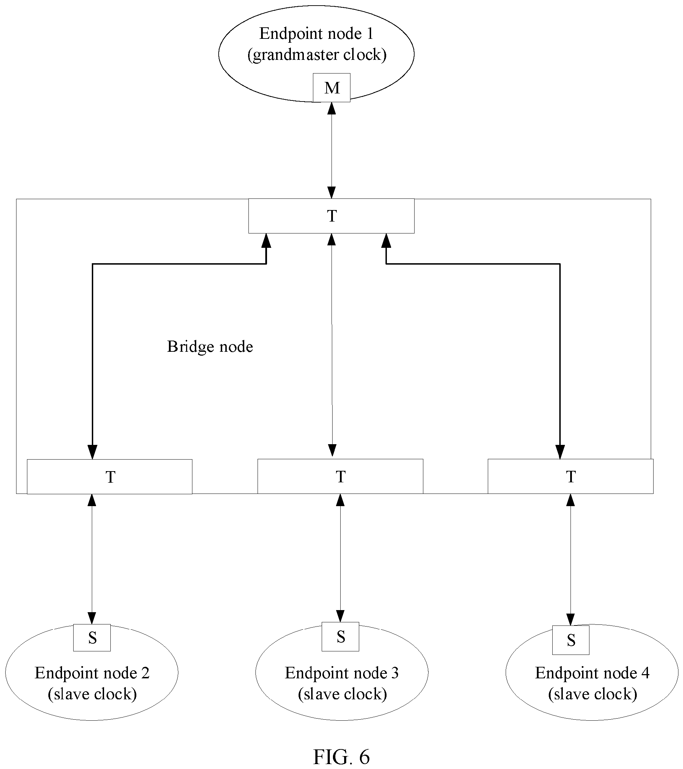

FIG. 6 is a schematic diagram of a gPTP-based network architecture according to this application. The network architecture is a tree architecture. An endpoint node 1 is connected to an endpoint node 2, an endpoint node 3, and an endpoint node 4 by a bridge node. A clock of the endpoint node 1 is a time reference of an entire network. Clocks of the endpoint node 2, the endpoint node 3, and the endpoint node 4 are slave clocks. A clock of the bridge node is a transparent clock. Ports of the bridge node are all transparent ports. After receiving a packet from the endpoint node 1, the bridge node forwards the packet to the endpoint node 2, the endpoint node 3, or the endpoint node 4. Alternatively, after receiving a packet from the endpoint node 2, the endpoint node 3, or the endpoint node 4, the bridge node forwards the packet to the endpoint node 1. Correspondingly, in this specification, the first node may be the endpoint node 1 shown in FIG. 6, the second node may be the endpoint node 2, the endpoint node 3, or the endpoint node 4 shown in FIG. 6, and the third node may be the bridge node shown in FIG. 6.

It should be understood that uses a single-stage bridge node is used as an example in FIG. 6, and a multi-stage bridge node may be used.

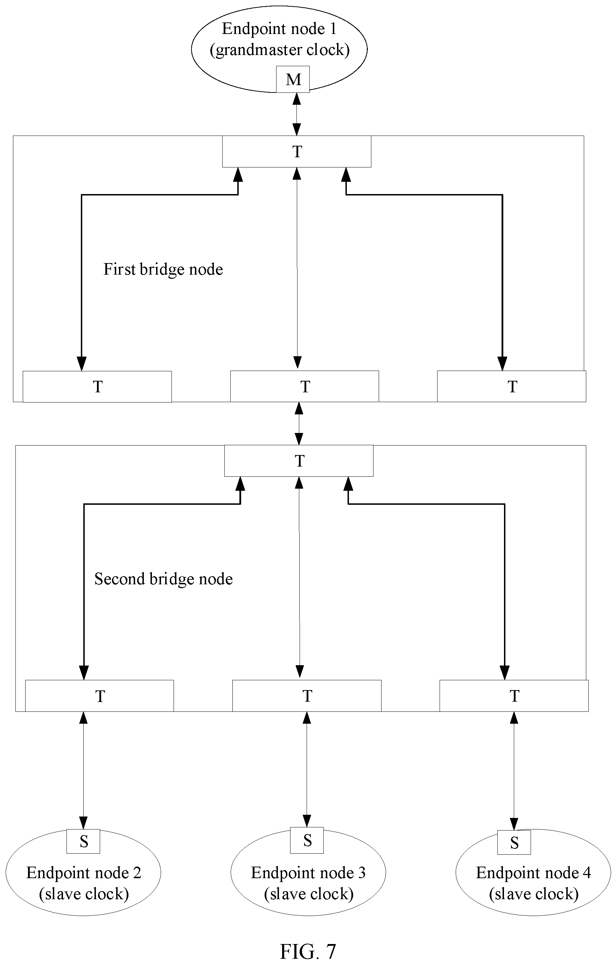

For example, FIG. 7 is a schematic diagram of another gPTP-based network architecture according to this application. An endpoint node 1 is connected to a first bridge node, the first bridge node is adjacent to a second bridge node, and the second bridge node is connected to an endpoint node 2, an endpoint node 3, and an endpoint node 4. The endpoint node 1 is connected to the endpoint node 2, the endpoint node 3, and the endpoint node 4 by the bridge nodes. Correspondingly, in this specification, the first node may be the endpoint node 1 shown in FIG. 6, the second node may be the endpoint node 2, the endpoint node 3, or the endpoint node 4 shown in FIG. 6, the third node may be the first bridge node shown in FIG. 7, and the fourth node may be the second bridge node shown in FIG. 7.

In embodiments of this application, a gPTP protocol architecture is adjusted from a hierarchical architecture to a tree architecture, so that the gPTP can support an E2E communication scenario, in other words, clock synchronization is directly performed between endpoint nodes, so that a slave clock node (for example, the endpoint node 2, 3, or 4 in FIG. 6) can quickly sense a status of a grandmaster clock node (for example, the endpoint node 1 in FIG. 6), and synchronization efficiency is improved. Second, the bridge nodes perform communication based on the gPTP protocol, and residence time of a packet does not need to be calculated, so that hardware deployment costs are reduced. In addition, because all ports of the bridge nodes are transparent ports, even if roles of the nodes connected to the ports of the bridge nodes are switched, a network topology of the ports of the bridge nodes is not affected, so that a network convergence time can be reduced.

In a possible design, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet in this specification further include a clock domain identifier (for example, DomainId). The clock domain identifier indicates a clock domain, and the clock domain is a clock domain in which the first node and the second node are located. Correspondingly, the third node (namely, the bridge node) forwards the packets based on the clock domain identifier. In embodiments of this application, a quantity of clock domains supported by the third node (namely, the bridge node) is not limited. For example, two clock domains may be supported, three clock domains may be supported, or four clock domains may be supported. It should be understood that if the third node further receives a packet of another clock domain, the third node may further forward the packet based on a clock domain identifier carried in the packet of the another clock domain.

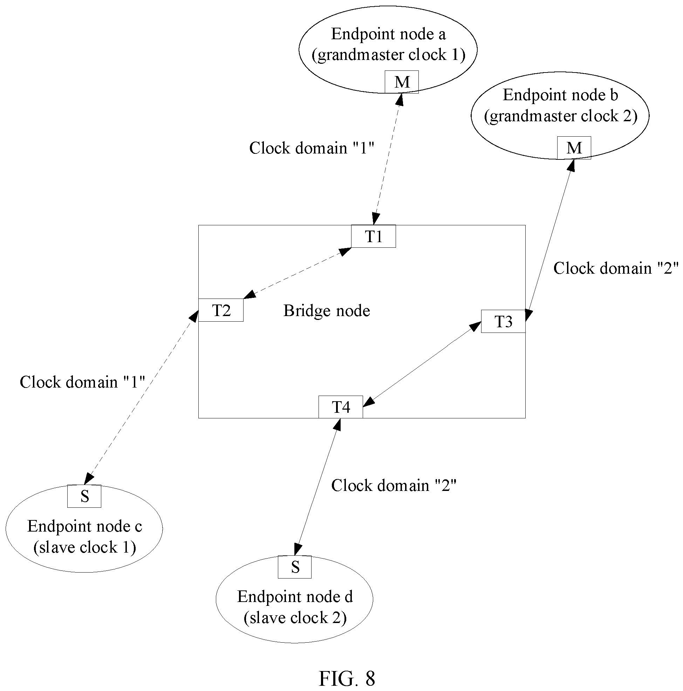

For example, referring to FIG. 8, two clock domains are used as an example: a port T1 of a bridge node is connected to an endpoint node a, a port T2 of the bridge node is connected to an endpoint node c, a port T3 of the bridge node is connected to an endpoint node b, and a port T4 of the bridge node is connected to an endpoint node d. If both a clock domain identifier carried in a packet sent by the endpoint node a and a clock domain identifier carried in a packet sent by the endpoint node c are "1", the endpoint node a and the endpoint node c belong to a same clock domain, in other words, a first clock domain indicated by the clock domain identifiers "1". Correspondingly, the bridge node forwards, to the endpoint node c, the packet sent by the endpoint node a (the packet received from the port T1 is sent out through the port T2), and forwards, to the endpoint node a, the packet sent by the endpoint node c (the packet received from the port T2 is sent out through the port T1). Similarly, a clock domain identifier carried in a packet sent by the endpoint node b and a clock domain identifier carried in a packet sent by the endpoint node d are both "2". Therefore, the endpoint node b and the endpoint node d belong to a same clock domain, in other words, a second clock domain indicated by the clock domain identifiers "2". Correspondingly, the bridge node forwards, to the endpoint node d, the packet sent by the endpoint node b (the packet received from the port T3 is sent out through the port T4), and forwards, to the endpoint node b, the packet sent by the endpoint node d (the packet received from the port T4 is sent out through the port T2). In FIG. 8, a path represented by a dashed line is a forwarding path of a packet of the first clock domain, in other words, the bridge node forwards a packet between the ports T1 and T2, and a path represented by a solid line is a forwarding path of a packet of the second clock domain, in other words, the bridge node forwards a packet between the ports T3 and T4.

In this way, accuracy of forwarding a packet by the third node (namely, the bridge node) in a multi-clock domain scenario can be improved.

In a possible design, a priority of forwarding the gPTP packet by the third node (namely, the bridge node) is higher than a priority of forwarding a precision time protocol PTP packet by the third node; and/or a priority of forwarding the gPTP packet by the bridge node is higher than a priority of forwarding a service packet by the third node. The service packet is a packet that is transmitted in a service transmission process and that carries service data, for example, a packet that carries service data such as a map or a video. Correspondingly, in a scenario in which the third node receives the PTP packet and/or the service packet when receiving the gPTP packet, the third node preferentially forwards the gPTP packet.

During specific implementation, after receiving a packet, the bridge node marks a priority of the packet based on a type of the packet, and then sequentially processes packets in descending order of priorities. For example, the bridge node classifies the priorities of the packets into eight types, which are "0", "1", "2", "3", "4", "5", "6", and "7" in ascending order. After the gPTP packet reaches the bridge node, the bridge node marks a priority of the gPTP packet as "7" (the highest level). After the PTP packet reaches the bridge node, the bridge node marks the priority of the PTP packet as "6" (the highest level), ..., and so on. The bridge node processes packets in descending order of priorities. After forwarding packets with the priority "7", the bridge node forwards packets with the priority "6". After forwarding the packets with the priority "6", the bridge node forwards packets with the priority "5", and so on. It should be understood that only examples are provided herein. During actual application, there may be another priority setting manner.

In this way, it can be ensured that a gPTP packet is preferentially forwarded by the third node, and efficiency of gPTP-based clock synchronization can be further improved.

The method provided in embodiments of this application is described below with reference to the accompanying drawings, and an apparatus provided in embodiments of this application is described below with reference to the accompanying drawings.

Based on a same technical concept, an embodiment of this application provides a packet transmission apparatus. The apparatus includes a module/unit/means configured to perform the method performed by the first node, the second node, or the third node in the foregoing method embodiments. The module/unit/means may be implemented by software, or may be implemented by hardware, or may be implemented by hardware executing corresponding software.

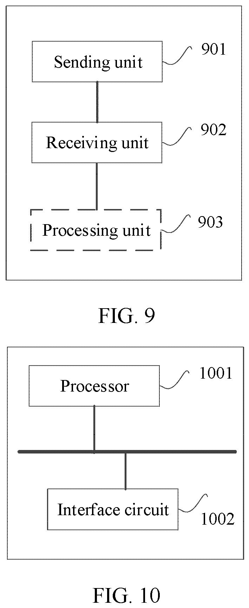

Referring to FIG. 9, the apparatus may include a sending unit 901 and a receiving unit 902. Optionally, the apparatus may further include a processing unit 903. In FIG. 9, a dashed line indicates that the processing unit 903 is optional.

For example, when the apparatus is used in a first node, the receiving unit 902 is configured to receive a first delay request packet from a second node, where the first delay request packet is for requesting to measure a time delay between the first node in which the apparatus is located and the second node, and a source address of the first delay request packet is an address of the second node. The sending unit 901 is configured to send a first delay response packet to the second node, where the first delay response packet includes first time information, the first time information indicates receiving time of the first delay request packet, and a destination address of the first delay response packet is the address of the second node. The first time information is for determining a time delay between the first node and the second node.

Alternatively, the sending unit 901 is configured to send a second delay request packet to the second node, where the second delay request packet is for requesting to measure the time delay between the first node and the second node, and the second delay request packet corresponds to the address of the second node. The receiving unit 902 is configured to receive a second delay response packet from the second node, where the second delay response packet includes third time information, the third time information indicates receiving time of the second delay request packet, and a source address of the second delay request packet is the address of the second node. The second delay response packet corresponds to the address of the second node.

For example, when the apparatus is used in a third node, the receiving unit 902 is configured to receive a first delay request packet from a second node. The sending unit 901 is configured to send the first delay request packet to a first node, where the first delay request packet is for requesting to measure a time delay between the first node and the second node, and a source address of the first delay request packet is an address of the second node. The receiving unit 902 is further configured to receive a first delay response packet from the first node. The sending unit 901 is further configured to send the first delay response packet to the second node, where the first delay response packet includes first time information, the first time information indicates receiving time of the first delay request packet, and a destination address of the first delay response packet is the address of the second node. The first time information is for determining the time delay between the first node and the second node.

It should be understood that all related content of the steps in the foregoing method embodiments may be cited in function descriptions of the corresponding functional modules. Details are not described herein again.

During specific implementation, the apparatus may have a plurality of product forms. Several possible product forms are described below.

Referring to FIG. 10, an embodiment of this application further provides a packet transmission apparatus. The apparatus includes at least one processor 1001 and an interface circuit 1002. The interface circuit 1002 is configured to receive a signal from another apparatus other than the apparatus and transmit the signal to the processor 1001, or send a signal from the processor 1001 to another communication apparatus other than the apparatus. The processor 1001 is configured to implement, by using a logic circuit or executing code instructions, the method performed by the first node, the second node, or the third node in the foregoing method embodiments.

It should be understood that the processor mentioned in embodiments of this application may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by the first node, the second node, the third node, or the like in the foregoing method embodiments is performed.

Based on a same technical concept, an embodiment of this application further provides a computer program product including instructions. The computer program product stores the instructions. When the instructions are run on a computer, the method performed by the first node, the second node, the third node, or the like in the foregoing method embodiments is performed.

Based on a same technical concept, an embodiment of this application further provides a vehicle, including the apparatus shown in FIG. 9 or FIG. 10.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A packet transmission method, wherein the method comprises:
receiving, by a first node, a first delay request packet from a second node, wherein the first delay request packet is for requesting to measure a time delay between the first node and the second node, and a source address of the first delay request packet is an address of the second node; and
sending, by the first node, a first delay response packet to the second node, wherein the first delay response packet comprises first time information, the first time information indicates receiving time of the first delay request packet, and a destination address of the first delay response packet is the address of the second node, wherein
the first time information is for determining the time delay between the first node and the second node.

2. The method according to claim 1, wherein the method further comprises:
sending, by the first node, a first follow-up packet to the second node, wherein the first follow-up packet comprises second time information, the second time information indicates sending time of the first delay response packet, a destination address in the first follow-up packet is the address of the second node, and the second time information is for determining the time delay between the first node and the second node.

3. The method according to claim 1 or 2, wherein the method further comprises:
sending, by the first node, a second delay request packet to the second node, wherein the second delay request packet is for requesting to measure the time delay between the first node and the second node, and the second delay request packet corresponds to the address of the second node; and
receiving, by the first node, a second delay response packet from the second node, wherein the second delay response packet comprises third time information, the third time information indicates receiving time of the second delay request packet, a source address of the second delay request packet is the address of the second node, and the second delay response packet corresponds to the address of the second node.

4. The method according to claim 3, wherein the method further comprises:
receiving, by the first node, a second follow-up packet from the second node, wherein the second follow-up packet comprises fourth time information, the fourth time information indicates sending time of the second delay response packet, a source address of the second follow-up packet is the address of the second node, and the second follow-up packet corresponds to the address of the second node.

5. The method according to any one of claims 1 to 4, wherein the method further comprises:
sending, by the first node, a first synchronization packet to the second node;
sending, by the first node, a third follow-up packet to the second node, wherein the third follow-up packet comprises fifth time information, and the fifth time information indicates sending time of the first synchronization packet;
sending, by the first node, a second synchronization packet to the second node; and
sending, by the first node, a fourth follow-up packet to the second node, wherein the fourth follow-up packet comprises sixth time information, and the sixth time information indicates sending time of the second synchronization packet, wherein
the fifth time information and the sixth time information are for determining a clock frequency deviation between the first node and the second node.

6. The method according to claim 5, wherein
the first node sends one or more of the first delay response packet, the first follow-up packet, the second delay request packet, the first synchronization packet, the third follow-up packet, the second synchronization packet, or the fourth follow-up packet to the second node through a third node; and
the first node receives one or more of the first delay request packet, the second delay response packet, or the second follow-up packet from the second node through the third node.

7. The method according to claim 6, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are generalized precise time protocol gPTP packets.

8. The method according to claim 6, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further comprise a clock domain identifier, and the clock domain identifier indicates a clock domain.

9. The method according to claim 7, wherein a priority of forwarding the gPTP packet by the third node is higher than a priority of forwarding a precision time protocol PTP packet by the third node; and/or
a priority of forwarding the gPTP packet by the third node is higher than a priority of forwarding a service packet by the third node.

10. A packet transmission method, wherein the method comprises:
receiving, by a third node, a first delay request packet from a second node, and sending, by the third node, the first delay request packet to a first node, wherein the first delay request packet is for requesting to measure a time delay between the first node and the second node, and a source address of the first delay request packet is an address of the second node; and
receiving, by the third node, a first delay response packet from the first node, and sending, by the third node, the first delay response packet to the second node, wherein the first delay response packet comprises first time information, the first time information indicates receiving time of the first delay request packet, and a destination address of the first delay response packet is the address of the second node, wherein
the first time information is for determining the time delay between the first node and the second node.

11. The method according to claim 10, wherein
the receiving, by a third node, a first delay request packet from a second node comprises:
receiving, by the third node, the first delay request packet from a fourth node; or receiving, by the third node, the first delay request packet from the second node; and
the sending, by the third node, the first delay response packet to the second node comprises:
sending, by the third node, the first delay response packet to the second node; or sending, by the third node, the first delay response packet to the fourth node, so that the fourth node sends a first delay packet to the second node.

12. The method according to claim 10, wherein the method further comprises:
receiving, by the third node, a first follow-up packet from the first node, and sending, by the third node, the first follow-up packet to the second node, wherein the first follow-up packet comprises second time information, the second time information indicates sending time of the first delay response packet, a destination address in the first follow-up packet is the address of the second node, and the second time information is used by the second node to determine the time delay between the first node and the second node.

13. The method according to any one of claims 10 to 12, wherein the method further comprises:
receiving, by the third node, a second delay request packet from the first node, and sending, by the third node, the second delay request packet to the second node, wherein the second delay request packet is for requesting to measure the time delay between the first node and the second node; and
receiving, by the third node, a second delay response packet from the second node, and sending, by the third node, the second delay response packet to the first node, wherein the second delay response packet comprises third time information, the third time information indicates receiving time of the second delay request packet, and a source address of the second delay request packet is the address of the second node.

14. The method according to claim 13, wherein the method further comprises:
receiving, by the third node, a second follow-up packet from the second node, and sending, by the third node, the second follow-up packet to the first node, wherein the second follow-up packet comprises fourth time information, the fourth time information indicates sending time of the second delay response packet, and a source address of the second follow-up packet is the address of the second node.

15. The method according to any one of claims 10 to 14, wherein the method further comprises:
receiving, by the third node, a first synchronization packet from the first node, and sending the first synchronization packet to the second node; and receiving, by the third node, a third follow-up packet from the first node, and sending the third follow-up packet to the second node, wherein the third follow-up packet comprises fifth time information, and the fifth time information indicates sending time of the first synchronization packet; and
receiving, by the third node, a second synchronization packet from the first node, and sending the second synchronization packet to the second node; and receiving, by the third node, a fourth follow-up packet from the first node, and sending the fourth follow-up packet to the second node, wherein the fourth follow-up packet comprises sixth time information, and the sixth time information indicates sending time of the second synchronization packet, wherein
the fifth time information and the sixth time information are for determining a clock frequency deviation between the first node and the second node.

16. The method according to claim 15, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

17. The method according to claim 15, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further comprise a clock domain identifier, and the clock domain identifier indicates a clock domain; and
the method further comprises:
forwarding, by the third node, one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet based on the clock domain identifier.

18. The method according to claim 16, wherein a priority of forwarding the gPTP packet by the third node is higher than a priority of forwarding a precision time protocol PTP packet by the third node; and/or a priority of forwarding the gPTP packet by the third node is higher than a priority of forwarding a service packet by the third node; and
the method further comprises:
if the third node receives the PTP packet and/or the service packet when receiving the gPTP packet, preferentially forwarding, by the third node, the gPTP packet.

19. A packet transmission apparatus, wherein the apparatus comprises:
a receiving unit, configured to receive a first delay request packet from a second node, wherein the first delay request packet is for requesting to measure a time delay between a first node in which the apparatus is located and the second node, and a source address of the first delay request packet is an address of the second node; and
a sending unit, configured to send a first delay response packet to the second node, wherein the first delay response packet comprises first time information, the first time information indicates receiving time of the first delay request packet, and a destination address of the first delay response packet is the address of the second node, wherein
the first time information is for determining the time delay between the first node and the second node.

20. The apparatus according to claim 19, wherein
the sending unit is further configured to send a first follow-up packet to the second node, wherein the first follow-up packet comprises second time information, the second time information indicates sending time of the first delay response packet, a destination address in the first follow-up packet is the address of the second node, and the second time information is for determining the time delay between the first node and the second node.

21. The apparatus according to claim 19 or 20, wherein the sending unit is further configured to send a second delay request packet to the second node, wherein the second delay request packet is for requesting to measure the time delay between the first node and the second node, and the second delay request packet corresponds to the address of the second node; and
the receiving unit is further configured to receive a second delay response packet from the second node, wherein the second delay response packet comprises third time information, the third time information indicates receiving time of the second delay request packet, a source address of the second delay request packet is the address of the second node, and the second delay response packet corresponds to the address of the second node.

22. The apparatus according to claim 21, wherein the receiving unit is further configured to receive a second follow-up packet from the second node, wherein the second follow-up packet comprises fourth time information, the fourth time information indicates sending time of the second delay response packet, a source address of the second follow-up packet is the address of the second node, and the second follow-up packet corresponds to the address of the second node.

23. The apparatus according to any one of claims 19 to 22, wherein the sending unit is further configured to: send a first synchronization packet to the second node; send a third follow-up packet to the second node, wherein the third follow-up packet comprises fifth time information, and the fifth time information indicates sending time of the first synchronization packet; send a second synchronization packet to the second node; and send a fourth follow-up packet to the second node, wherein the fourth follow-up packet comprises sixth time information, and the sixth time information indicates sending time of the second synchronization packet, wherein
the fifth time information and the sixth time information are for determining a clock frequency deviation between the first node and the second node.

24. The apparatus according to claim 23, wherein
the sending unit is specifically configured to send one or more of the first delay response packet, the first follow-up packet, the second delay request packet, the first synchronization packet, the third follow-up packet, the second synchronization packet, or the fourth follow-up packet to the second node through a third node; and
the receiving unit is specifically configured to receive one or more of the first delay request packet, the second delay response packet, or the second follow-up packet from the second node through the third node.

25. The apparatus according to claim 24, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

26. The apparatus according to claim 24, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further comprise a clock domain identifier, and the clock domain identifier indicates a clock domain.

27. The apparatus according to claim 25, wherein a priority of forwarding the gPTP packet by the third node is higher than a priority of forwarding a precision time protocol PTP packet by the third node; and/or
a priority of forwarding the gPTP packet by the third node is higher than a priority of forwarding a service packet by the third node.

28. A packet transmission apparatus, wherein the apparatus comprises:
a receiving unit, configured to receive a first delay request packet from a second node; and
a sending unit, configured to send the first delay request packet to a first node, wherein the first delay request packet is for requesting to measure a time delay between the first node and the second node, and a source address of the first delay request packet is an address of the second node, wherein
the receiving unit is further configured to receive a first delay response packet from the first node;
the sending unit is further configured to send the first delay response packet to the second node, wherein the first delay response packet comprises first time information, the first time information indicates receiving time of the first delay request packet, and a destination address of the first delay response packet is the address of the second node; and
the first time information is for determining the time delay between the first node and the second node.

29. The apparatus according to claim 28, wherein
when receiving the first delay request packet from the second node, the receiving unit is specifically configured to:
receive the first delay request packet from a fourth node; or receive the first delay request packet from the second node; and
when sending the first delay response packet to the second node, the sending unit is specifically configured to:
send the first delay response packet to the second node; or send the first delay response packet to the fourth node, so that the fourth node sends a first delay packet to the second node.

30. The apparatus according to claim 28, wherein the receiving unit is further configured to receive a first follow-up packet from the first node; and
the sending unit is further configured to send the first follow-up packet to the second node, wherein the first follow-up packet comprises second time information, the second time information indicates sending time of the first delay response packet, a destination address in the first follow-up packet is the address of the second node, and the second time information is used by the second node to determine the time delay between the first node and the second node.

31. The apparatus according to any one of claims 28 to 30, wherein the receiving unit is further configured to receive a second delay request packet from the first node;
the sending unit is further configured to send the second delay request packet to the second node, wherein the second delay request packet is for requesting to measure the time delay between the first node and the second node;
the receiving unit is further configured to receive a second delay response packet from the second node; and
the sending unit is further configured to send the second delay response packet to the first node, wherein the second delay response packet comprises third time information, the third time information indicates receiving time of the second delay request packet, and a source address of the second delay request packet is the address of the second node.

32. The apparatus according to claim 31, wherein the receiving unit is further configured to receive a second follow-up packet from the second node; and
the sending unit is further configured to send the second follow-up packet to the first node, wherein the second follow-up packet comprises fourth time information, the fourth time information indicates sending time of the second delay response packet, and a source address of the second follow-up packet is the address of the second node.

33. The apparatus according to any one of claims 28 to 32, wherein the receiving unit is further configured to receive a first synchronization packet from the first node;
the sending unit is further configured to send the first synchronization packet to the second node;
the receiving unit is further configured to receive a third follow-up packet from the first node;
the sending unit is further configured to send the third follow-up packet to the second node, wherein the third follow-up packet comprises fifth time information, and the fifth time information indicates sending time of the first synchronization packet;
the receiving unit is further configured to receive a second synchronization packet from the first node;
the sending unit is further configured to send the second synchronization packet to the second node;
the receiving unit is further configured to receive a fourth follow-up packet from the first node; and
the sending unit is further configured to send the fourth follow-up packet to the second node, wherein the fourth follow-up packet comprises sixth time information, and the sixth time information indicates sending time of the second synchronization packet, wherein
the fifth time information and the sixth time information are for determining a clock frequency deviation between the first node and the second node.

34. The apparatus according to claim 33, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet are gPTP packets.

35. The apparatus according to claim 33, wherein one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet further comprise a clock domain identifier, and the clock domain identifier indicates a clock domain; and
the sending unit is further configured to forward one or more of the first delay response packet, the first follow-up packet, the second delay request packet, the first synchronization packet, the third follow-up packet, the second synchronization packet, the fourth follow-up packet, the first delay request packet, the second delay response packet, or the second follow-up packet based on the clock domain identifier.

36. The apparatus according to claim 34, wherein a priority of forwarding the gPTP packet by the third node in which the apparatus is located is higher than a priority of forwarding a precision time protocol PTP packet by the third node in which the apparatus is located; and/or a priority of forwarding the gPTP packet by the third node in which the apparatus is located is higher than a priority of forwarding a service packet by the third node in which the apparatus is located; and
the sending unit is further configured to: if the third node in which the apparatus is located receives the PTP packet and/or the service packet when receiving the gPTP packet, preferentially forward the gPTP packet.

37. A packet transmission apparatus, wherein the apparatus comprises a processor and an interface circuit, the interface circuit is configured to receive a signal from another apparatus other than the apparatus and transmit the signal to the processor, or send a signal from the processor to another communications apparatus other than the apparatus, and the processor is configured to implement the method according to any one of claims 1 to 9 or claims 10 to 18 by using a logic circuit or executing code instructions.

38. A computer-readable storage medium, comprising a program or instructions, wherein when the program or the instructions are run on a computer, the method according to any one of claims 1 to 9 or claims 10 to 18 is performed.

39. A packet transmission system, comprising the apparatus according to any one of claims 19 to 27 and the apparatus according to any one of claims 28 to 36.

40. A vehicle, comprising the apparatus according to any one of claims 19 to 27, or the apparatus according to any one of claims 28 to 36, or the apparatus according to claim 37, or the computer-readable storage medium according to claim 38, or the system according to claim 39.
